# EUROPÄISCHE PATENTSCHRIFT

(11) **EP 2 482 489 B1**
(45) Veröffentlichungstag und Bekanntmachung des Hinweises auf die Patenterteilung: **07.03.2018**
(21) Anmeldenummer: 12150812.1
(22) Anmeldetag: 11.01.2012
(51) Int. Cl.: H04L 12/14

(54) **Bereitstellung von personalisierten Informationen für Nutzer eines Datennetzes**
Provision of personalised information for users of a data network
Fourniture d'informations personnalisées pour utilisateurs d'un réseau de données

(30) Priorität: 28.01.2011 DE 102011003333; 01.02.2011 DE 102011003474
(43) Veröffentlichungstag der Anmeldung: 01.08.2012
(73) Patentinhaber: Vodafone Holding GmbH, 40213 Düsseldorf (DE)
(72) Erfinder: Lehnert, Thorsten, 47906 Kempen (DE)
(74) Vertreter: Jostarndt Patentanwalts-AG

(56) Entgegenhaltungen:
- US-A1- 2003 014 367
- US-A1- 2005 266 825
- US-A1- 2007 149 252
- US-A1- 2010 216 424

## Beschreibung

Die Erfindung befasst sich mit der Bereitstellung von personalisierten Informationen, insbesondere Tarifinformationen, in einem Datentransportnetz, bei dem es sich um ein Mobilfunknetz handeln kann. Insbesondere betrifft die Erfindung ein Verfahren und ein System zum angepassten Bereitstellen von personalisierten Informationen in einem Datentransportnetz.

In Datentransportnetzen, wie beispielsweise Mobilfunknetzen, werden paketorientierte Datendienste bereitgestellt, die es Nutzern ermöglichen, Paketdaten über das Datentransportnetz zu senden und zu empfangen. Beispiele für derartige Datendienste in Mobilfunknetzen der zweiten Generation (2G) und der dritten Generation (3G) sind GPRS (General Packet Radio Service) und HSDPA (High Speed Downlink Packet Access) bzw. HSPA (High Speed Packet Access). Die Packetdatendienste können beispielsweise dazu genutzt werden, über das Datentransportnetz auf das Internet zuzugreifen, um etwa Webseiten aufzurufen oder internetbasierte Nachrichtendienste zu nutzen.

Für die Nutzung derartiger Datendienste werden insbesondere in Mobilfunknetzen abgestufte Tarife angeboten, die jeweils an einen bestimmten Nutzungsumfang angepasst sind. Bei derartigen Tarifen gibt es "Schwellen" des Nutzungsumfangs, nach deren Überschreiten ein anderer Tarif für den Nutzer günstiger ist. Beispielsweise können Tarife mit pauschal abgegoltenen oder für eine verringerte Gebühr verfügbaren Inklusivnutzungszeiten oder übertragbaren Inklusivdatenvolumina und einer zeit- oder volumenbasierten Abrechnung nach dem Überschreiten der Inklusivnutzungszeiten bzw. -volumina vorgesehen sein. Unterschiedliche Tarife können sich dabei in den Inklusivzeiten und/oder Inklusivdatenvolumina sowie in den Kosten der zeit- und volumenbasierten Abrechnung unterscheiden, wobei nach Überschreiten einer Schwelle beispielsweise ein Tarif mit größerer Inklusivzeit und/oder größerem Inklusivdatenvolumen trotz erhöhter Pauschalgebühr für den Nutzer günstiger sein kann. Da die Tarifstruktur oftmals sehr komplex ist und Nutzer Informationen über die bestehenden Tarife üblicherweise nicht stets verfügbar haben, überschreiten Nutzer häufig unbemerkt die zuvor genannten Schwellen, wodurch unnötig hohe Kosten für die Nutzung des Dienstes anfallen. Oder Nutzer von Mobilfunknetzen vermeiden die Nutzung von Datendienstes, da sie zu hohe Kosten fürchten.

Insbesondere vor diesem Hintergrund ist es wünschenswert, Nutzern eines Datentransportnetzes Informationen in Abhängigkeit von ihrem Nutzungsverhalten bereitstellen zu können. Ferner ist es wünschenswert, Nutzern des Datentransportnetzes angepasste Informationen bereitstellen zu können. Durch eine solche angepasste Informationsbereitstellung können einem Nutzer insbesondere Informationen zu Tarifen angezeigt werden, die besser an sein Nutzungsverhalten angepasst sind als sein aktueller Tarif für die Nutzung von Diensten des Datentransportnetzes.

Die US 2005/0266825 A1 offenbart unter Anderem ein Verfahren zur Benachrichtigung eines Nutzers, wenn der Nutzer eine z.B. zeitbasierte Nutzungsberechtigung bei einem Kommunikationsdienstanbieter erworben hat, und der Nutzer die gebuchte Zeit überschreitet.

Die US 2003/014367 A1 offenbart ein Verfahren zur Benachrichtigung eines Nutzers, wenn die Nutzung einer Kommunikationsdienstleistung einen Schwellwert überschreitet. Die vorliegende Erfindung schlägt ein Verfahren mit den Merkmalen des Anspruchs 1 und ein System mit den Merkmalen des Anspruchs 12 vor. Ausführungsformen des Verfahrens und des Systems sind in den abhängigen Ansprüchen angegeben.

Gemäß einem ersten Aspekt stellt die Erfindung ein Verfahren zum personalisierten Bereitstellen von Informationen für einen Nutzer in einem Datentransportnetz bereit. Bei dem Verfahren ist vorgesehen, dass bei einer bestehenden Datenverbindung zwischen einem Endgerät des Nutzers und dem Datentransportnetz wenigstens eine mit der Datenverbindung in Verbindung stehende Nutzungsgröße in einer Netzeinrichtung des Datentransportnetzes mit einem Schwellenwert verglichen wird, wobei der Schwellenwert in Abhängigkeit von in dem Datentransportnetz hinterlegten Nutzerdaten des Nutzers bestimmt wird. Aufgrund des Überschreitens des Schwellenwerts durch die Nutzungsgröße werden von einer Bereitstellungseinheit des Datentransportnetzes die Informationen zur Anzeige an dem Endgerät des Nutzers bereitgestellt.

Gemäß einem weiteren Aspekt der Erfindung wird ein System zum personalisierten Bereitstellen von Informationen für einen Nutzer eines Datentransportnetzes bereitgestellt. Das System umfasst eine Netzeinrichtung des Datentransportnetzes, die dazu ausgestaltet ist, bei einer bestehenden Datenverbindung zwischen einem Endgerät des Nutzers und dem Datentransportnetz wenigstens eine mit der Datenverbindung in Verbindung stehende Nutzungsgröße in einer Netzeinrichtung des Datentransportnetzes mit einem Schwellenwert zu vergleichen und den Schwellenwert in Abhängigkeit von in dem Datentransportnetz hinterlegten Nutzerdaten des Nutzers zu bestimmen. Zudem umfasst das System eine mit der Netzeinrichtung zusammenwirkende Bereitstellungseinheit des Datentransportnetzes, wobei Informationen zur Anzeige an dem Endgerät des Nutzers aufgrund einer Feststellung des Überschreitens des Schwellenwerts durch die Nutzungsgröße von der Bereitstellungseinheit bereitstellbar sind.

Vorteilhaft ermöglichen das Verfahren und das System aufgrund der Überwachung der Nutzungsgröße im Hinblick auf ein Überschreiten des Schwellenwerts, Nutzern des Datentransportnetzes die Informationen in Abhängigkeit von ihrem Nutzungsverhalten bereitstellen zu können. Der Schwellenwert kann vorteilhaft anhand von in dem Datennetz gespeicherten Nutzerdaten ermittelt werden. Hierdurch kann für jeden Nutzer ein angepasster Schwellenwert vorgegeben werden. Die Informationen werden aufgrund einer Feststellung bereitgestellt, dass die Nutzungsgröße den Schwellenwert überschreitet bzw. überschritten hat.

Im Hinblick auf die zuvor genannte Problemstellung, den Nutzer über alternative Tarife zu informieren, geben die Nutzerdaten, die zur Ermittlung des Schwellenwerts herangezogen werden, insbesondere den aktuellen Tarif des Nutzers an. Auf diese Weise kann der Schwellenwert in Abhängigkeit von dem Tarif des Nutzers bestimmt werden. Der Schwellenwert kann sich insbesondere an der zuvor genannten "Schwelle" orientieren, bei deren Überschreiten ein anderer Tarif für den Nutzer günstiger ist. Anhand der bereitgestellten Informationen kann der Nutzer insbesondere hierüber in Kenntnis gesetzt werden.

Die Überwachung der Nutzungsgröße erfolgt bei einer bestehenden Verbindung, d.h. insbesondere dann, wenn der Nutzer in das Datentransportnetz eingebucht ist und Daten zu dem Endgerät des Nutzers übertragen und/oder von dem Endgerät des Nutzers gesendet werden. Als Nutzungsgröße kommt grundsätzlich jede beliebige Größe in Frage, die in dem Datentransportnetz im Zusammenhang mit einer Datenverbindung erfassbar ist. Insbesondere kann es sich bei der Nutzungsgröße um ein übertragenes Datenvolumen handeln. Dabei kann die Nutzungsgröße dem nach einem Bezugszeitpunkt zu dem Endgerät des Nutzers übertragenen Downlinkdatenvolumen oder dem nach dem Bezugszeitpunkt von dem Endgerät des Nutzers gesendeten Uplinkdatenvolumen. Gleichfalls kann die Nutzungsgröße die Summe des nach dem Bezugszeitpunkt erfasstem Downlink- und Uplinkdatenvolumens sein. In einer weiteren Ausführungsform handelt es sich bei der Nutzungsgröße um die Dauer eines Zugriffs auf das Datentransportnetz bzw. einer Einbuchung des Nutzers in einen Datendienst des Datentransportnetzes nach dem Bezugszeitpunkt. Der Bezugszeitpunkt kann grundsätzlich beliebig gewählt werden. Sofern Informationen über alternative Tarife bereitgestellt werden sollen und die Nutzung des Datendienstes separat vorgegebenen Zeiträumen abgerechnet wird, kann es sich bei dem Bezugszeitpunkt beispielsweise um einen Beginn eines Abrechnungszeitrums handeln.

Um den Nutzer auf einen günstigeren Tarif hinzuweisen, kann die Nutzungsgröße insbesondere der Größe entsprechen, auf deren Basis die Nutzung des Datentransportnetzes abgerechnet wird. Dabei können eine oder mehrere der genannten Größen in Kombination für die Abrechnung der Nutzung des Datentransportnetzes in dem jeweiligen Tarif des Nutzers vorgesehen sein.

In einer weiteren Ausführungsform des Verfahrens und des Systems werden die Informationen in Abhängigkeit von den Nutzerdaten und/oder dem überschrittenen Schwellenwert bestimmt. Dies kann insbesondere in der Bereitstellungseinheit vorgenommen werden. Durch die Anpassung der bereitgestellten Informationen an die Nutzerdaten und/oder den überschrittenen Schwellenwert können dem Nutzer individualisierte Informationen bereitgestellt werden. Im Hinblick auf die Überschreitung der Schwelle des Nutzungsumfangs eines Tarifs wird der Nutzer nicht nur darüber informiert werden, dass Tarife existieren, die günstiger sind als sein aktueller Tarif, sondern die Information geben-auch die alternativen, günstigeren Tarif an.

Die Informationen sind in einer Webseite enthalten, die von der Bereitstellungseinheit bereitgestellt wird. Die Bereitstellung auf einer Webseite hat insbesondere den Vorteil, dass Endgeräte, die für den Zugriff auf das Datentransportnetz verwendet werden, in der Regel bereits standardmäßig über Programme zur Darstellung von Webseiten verfügen. Darüber hinaus ermöglichen Webseiten eine Interaktion mit dem Nutzer. Eine solche Webseite mit der Möglichkeit zur Interaktion mit dem Nutzer wird von der Bereitstellungseinheit bereitgestellt. Es ist vorgesehen, dass der Nutzer einen alternativen Tarif durch eine Bedienaktion auf der bereitgestellten Webseite buchen kann.

Um die Webseite automatisch, d.h. ohne eine weitere erforderliche Nutzeraktion, bereitstellen zu können, ist in einer Ausgestaltung des Verfahrens und des Systems vorgesehen, dass eine von dem Endgerät gesendete Anforderung einer Webressource in dem in dem Datentransportnetz oder einem damit verbundenen Netz innerhalb des Datentransportnetzes zu der Bereitstellungseinheit umgeleitet wird. Die Umleitung kann insbesondere von der Netzeinrichtung vorgenommen werden, welche die Nutzungsgröße im Hinblick auf eine Überschreitung des Schwellenwerts überwacht. Bei der angeforderten Webressource kann es sich beispielsweise um eine Webseite oder eine andere Ressource handeln, auf die der Nutzer mittels seines Endgeräts zugreifen möchte und die von einem Server im Datentransportnetz oder einem mit dem Datentransportnetz verbundenen Netz bereitgestellt wird. Für den Zugriff auf Webressourcen kann das HTTP (Hypertext Transfer Protocol) verwendet werden. In diesem Fall kann die Anforderung ein HTTP Request sein.

Eine verbundene Ausgestaltung des Verfahrens und des Systems ist dadurch gekennzeichnet, dass zusammen mit der umgeleiteten Anforderung eine Nutzerkennung des Nutzers an die Bereitstellungseinheit gesendet wird, und dass die Bereitstellungseinheit die Nutzerdaten unter Verwendung der Nutzerkennung bestimmt. Auf diese Weise kann die Bereitstellungseinheit die Nutzerdaten eigenständig ermitteln, insbesondere separat von der Netzeinrichtung, in der die Nutzerdaten ebenfalls ermittelt werden können. Damit kann beispielsweise vermieden werden, dass eine Schnittstelle bzw. ein Mechanismus für eine Übermittlung der Nutzerdaten von der Netzeinrichtung an die Bereitstellungseinheit vorgesehen werden muss.

Eine weitere Ausgestaltung des Verfahrens und des Systems beinhaltet, dass von dem Netz eine Nachricht mit einer Webadresse an das Endgerät gesendet wird, wobei anhand der Webadresse ein Aufruf der Webseite mittels des Endgeräts vorgenommen werden kann. Vorteilhaft wird hierdurch eine Alternative zur Umleitung einer von dem Endgerät gesendeten Anforderung einer Webressource geschaffen, um die Information für den Nutzer zugänglich zu machen. Vorteilhaft kann diese Alternative auch dann eingesetzt werden, wenn das Endgerät keine Anforderung einer Webressource sendet. Dies kann beispielsweise der Fall sein, wenn der Nutzer nicht mittels eines Webbrowsers auf das Datentransportnetz bzw. ein damit verbundenes Netz zugreift, sondern mittels eines anderen Programms, das die für die Umleitung benötigten Anforderungen nicht erzeugt.

In einer verbundenen Ausführungsform des Verfahrens und des Systems ist vorgesehen, dass die Nachricht an das Endgerät gesendet wird, wenn innerhalb eines aufgrund des Überschreitens des Schwellenwerts gestarteten Zeitintervalls kein Zugriff auf die Webseite von der Bereitstellungseinheit festgestellt wird. Auf diese Weise kann zunächst "versucht" werden, die Webseite durch die Umleitung der Anforderung einer Webressource verfügbar zu machen, und die zuvor beschriebene Nachricht kann gesendet werden, wenn dies innerhalb eines Zeitintervalls nicht gelingt. Wie zuvor erläutert, könnte dies etwa der Fall sein, wenn der Nutzer nicht mit einem Webbrowser auf des Datentransportnetz bzw. ein verbundenes Netz zugreift.

Eine Ausgestaltung des Verfahrens und des Systems beinhaltet, dass die Netzeinheit dafür vorgesehen ist, an das Endgerät adressierte und/oder von dem Endgerät gesendete Datenpakete weiterzuleiten. Da Daten des Nutzers über eine solche Netzeinrichtung weitergeleitet werden, ist diese besonders zur Überwachung der Nutzungsgröße geeignet. Insbesondere kann die Überwachung in einfacher Weise als zusätzlich Funktion in einer solchen Netzeinrichtung implementiert werden.

Das Datentransportnetz ist in einer Ausführungsform des Verfahrens und des Systems als ein Mobilfunknetz ausgestaltet. Bei der Netzeinrichtung kann es sich in einem solchen Datentransportnetz um einen GGSN (Gateway GPRS Support Node) handeln. Dieser ist insbesondere für die Weiterleitung von Datenpakten des Nutzers zuständig. Ferner kann in einem GGSN bereits eine Funktion zur Erfassung der Nutzungsgröße implementiert sein, um die Abrechnung der Dienstnutzung zu ermöglichen. Diese Funktion kann auch zur Überwachung der Nutzungsgröße im Hinblick ein Überschreiten des Schwellenwerts genutzt werden.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figur beschrieben werden.

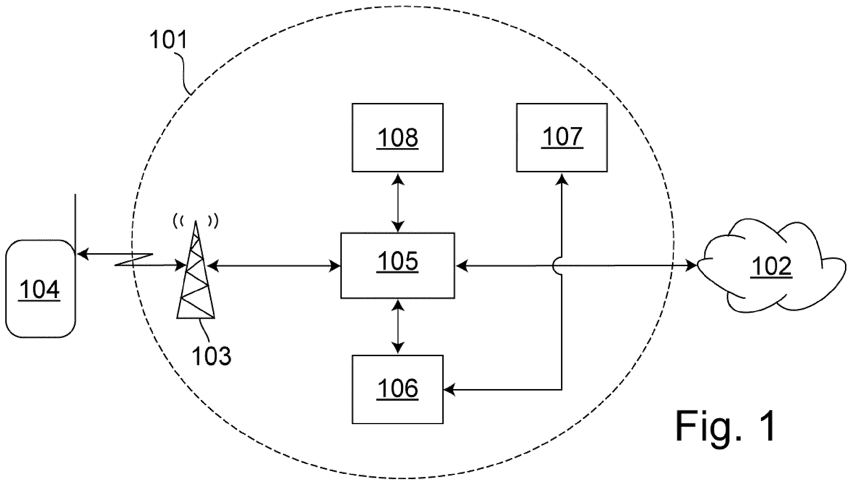

Figur 1 zeigt eine schematische Darstellung einer Ausgestaltung eines Systems zur Bereitstellung bedarfsangepasster Informationen in einem als Mobilfunknetz ausgestalteten Datentransportnetz.

In der Figur 1 sind in einer schematischen Darstellung ausgewählte Komponenten eines Kommunikationssystems mit einem als Funknetz 101 ausgestalteten Datentransportnetz gezeigt. Die Komponenten werden verwendet, um einen paketvermittelnden Datendienst bereitzustellen, der es Nutzern ermöglicht, Paketdaten über das Mobilfunknetz 101 zu senden und zu empfangen. Dabei können paketvermittelnde Datenverbindungen zu Zielen im Mobilfunknetz 101 und/oder in einem mit dem Mobilfunknetz 101 verbundenen Datennetz 102 aufgebaut werden. Der Transport von Datenpaketen unter Verwendung des Datendienstes kann insbesondere auf dem Internet Protocol (IP) basieren. Bei dem Datennetz 102 kann es sich beispielsweise um das Internet oder ein weiteres öffentliches oder privates Datennetz 102 handeln.

Das Funknetz 101 erlaubt Nutzern einen drahtlosen Zugriff über ein funkbasiertes Zugangsnetz. Das Zugangsnetz ist zellular aufgebaut und jeder Zelle des Zugangsnetzes ist ein Zugangspunkt 103 zugeordnet, mit dem sich Endgeräte 104 von Nutzern des Datendienstes drahtlos verbinden können und von denen in der Figur 1 beispielhaft einer dargestellt ist. Die Zugangspunkte 103 sind jeweils mit einem oder mehreren Netzeinheiten des Funknetzes 101 verbunden, die für den Aufbau und/oder die Aufrechterhaltung der Verbindung eines Endgeräts 104 sorgen und insbesondere die Weiterleitung (Routing) von Datenpaketen innerhalb des Funknetzes 101 übernehmen und von denen in der Figur 1 eine Netzeinheit 105 dargestellt ist.

Innerhalb der Verbindung eines Endgeräts 104 können mehrere solcher Netzeinheiten 105 unterschiedlicher Art, d.h. mit unterschiedlichen Funktionen, vorgesehen sein. Dabei ist den zur Nutzung des Datendienstes in das Funknetz 101 eingebuchten Endgeräten 104 vorzugsweise jeweils eine definierte Netzeinheit 105 einer bestimmten Art zugeordnet. Dies bedeutet insbesondere, dass jeweils genau eine vorgegebene Netzeinheit 105 einer bestimmten Art für die Weiterleitung von Datenpaketen zuständig ist, die von einem Endgerät 104 gesendet oder an das Endgerät 104 übermittelt werden. Die Zuordnung der zuständigen Netzeinheiten 105 zu einem Endgerät 104 kann sich aufgrund der Zuordnung dieser Netzeinheiten 105 zu dem Zugangspunkt 103 ergeben, mit dem das Endgerät 104 verbunden ist, und/oder aufgrund von weiteren Kriterien. Die definierte Zuständigkeit der Netzeinheiten 105 für ein Endgerät 104 bedeutet jedoch nicht, dass die Zuständigkeit für ein bestimmtes Endgerät 104 nicht zu einer anderen Netzeinheit 105 übertragen werden kann. Vorzugsweise ist dies möglich und erfolgt anhand von vorgegebenen Prozessen. Beispielsweise bei einem Handover eines Endgeräts 104 zu einem anderem Zugangspunkt 103 des Funknetzes 101 kann ein Wechsel einer zuständigen Netzeinheit 105 vorgesehen sein - etwa dann, wenn dem neuen Zugangspunkt 103 eine oder mehrere andere Netzeinheiten 105 zugeordnet sind als dem alten Zugangspunkt 103.

Das Funknetz 101 ist in Implementierungen der Erfindung als ein Mobilfunknetz nach einer Spezifikation des 3rd Generation Partnership Project (3GPP) ausgestaltet, insbesondere als ein GSM (Global System for Mobile Communications)-, EDGE (Enhanced Data Rates for GSM Evolution)-, UMTS (Universal Mobile Telecommuniations System)- oder SAE/LTE (System Architecture Evolution/Long Term Evolution)-Netz. Bei dem Datendienst kann es sich beispielsweise um einen GPRS oder EGPRS (Enhanced GPRS) handeln, falls das Funknetz 101 als GSM- bzw. EDGE-Netz ausgestaltet ist, um einen UMTS-Paketdatendienst oder einen HSDPA- bzw. HSPA-Dienst, sofern das Funknetz 101 als ein UMTS-Netz ausgestaltet ist, oder um einen entsprechenden Datendienst in einem SAE/LTE-Netz. Gleichfalls kann das Funknetz 101 jedoch auch in anderer Weise ausgestaltet sein, etwa als ein WLAN (Wireless Local Access Network) oder WiMAX (Worldwide Interoperability for Microwave Access)-Netz oder nach einer weiteren dem Fachmann bekannten Funknetzspezifikation.

Die im Funknetz 101 für den Aufbau und die Aufrechterhaltung der Verbindung eines Endgeräts 104 vorgesehenen Netzeinheiten 105 umfassen beispielsweise in GSM- bzw. EDGE-Netzen sowie in UMTS-Netzen einen SGSN (Serving GPRS Support Node) und einen GGSN. SGSN und GGSN sind insbesondere dafür zuständig, von dem Endgerät 104 erhaltene Daten an nachfolgende Netzknoten weiterzuleiten und umgekehrt. Darüber hinaus wird für das Endgerät 104 über den GGSN ein Kontext für das Routing von Datenpaketen, insbesondere ein so genannter PDP (Packet Data Protocol)-Kontext, aufgebaut und dem Endgerät 104 eine IP-Adresse zur Adressierung von Datenpaketen zugeordnet, nachdem die Berechtigung des Endgeräts 104 bzw. seines Nutzers zur Nutzung des Datendienstes bei einer Berechtigungsprüfung festgestellt worden ist. Darüber hinaus können weitere Netzeinheiten 105 für den Aufbau und die Aufrechterhaltung der Datenverbindung eines Endgeräts 104 zuständig sein, z.B. Proxy-Server mit bestimmten Funktionen, wie etwa der Kompression und/oder Formatumwandlung von Daten, insbesondere von Bild- und Videodaten die zur Anzeige an dem Endgerät 104 vorgesehen sind.

In einer Ausgestaltung der Erfindung werden Funktionen zur Überwachung einer oder mehrerer Nutzungsgrößen im Hinblick auf das Überschreiten eines zugehörigen Schwellenwerts in einer als GGSN ausgestalteten Netzeinheit 105 und einer zugeordneten Steuereinrichtung 106 implementiert. Die Steuereinrichtung 106 ist in der dargestellten Ausführungsform eine separate Einrichtung des Funknetzes 101, die mit der als GGSN ausgestalteten Netzeinheit 105 verbunden ist und einen oder mehrere Servercomputer umfasst. Die Steuereinrichtung 106 kann insbesondere Nutzer bei der Anmeldung an dem Datendienst autorisieren, und ein für die Abrechnung relevantes Datenvolumen oder eine für die Abrechnung relevante Nutzungsdauer erfassen und an ein Buchungssystem weiterleiten. Diese Aufgaben können beispielsweise von einem in der Steuereinrichtung 106 enthaltenen AAA (Authentication Authorization Accounting)-Server übernommen werden. Zur Kommunikation mit der Netzeinheit 105 kann die Steuereinrichtung 106 das RADIUS (Remote Authentication Dial-In User Service)-Protokoll oder ein anderes AAA-Protokoll nutzen.

Zur Nutzerautorisierung können Anfragen zur Einbuchung in den Datendienst von der als GGSN ausgestalteten Netzeinheit 105 an die Steuereinrichtung 106 weitergeleitet werden, welche dann beispielsweise durch einen Vergleich von Nutzerangaben, die von dem Endgerät 104 des Nutzers übermittelt werden, mit im Funknetz 101 gespeicherten Nutzerangaben die Berechtigung des Nutzers zum Zugriff auf den Datendienst prüft. Die Nutzerangaben können dabei in einer Nutzerdatenbank 107 gespeichert sein, auf welche die Steuereinrichtung 106 zugreift. Nach erfolgreicher Berechtigungsprüfung kann die Steuereinrichtung 106 den Zugriff auf den Datendienst für den Nutzer freigeben und dem Endgerät 104 des Nutzers beispielsweise eine IP-Adresse zuordnen, die diesem bei der Aktivierung des PDP-Kontextes von der als GGSN ausgestalteten Netzeinheit 105 zugewiesen wird.

Neben der Einbuchung in den Datendienst wird die Steuereinrichtung 106 auch von der als GGSN ausgeführten Netzeinheit 105 informiert, wenn sich der Nutzer von dem Datendienst abmeldet oder die Verbindung zwischen dem Funknetz 101 und dem Endgerät 104 des Nutzers abbricht. Ausgehend von dem Zeitpunkt der Einbuchung kann die Steuereinrichtung 106 somit die Dauer der Nutzung des Dienstes für die von der zugeordneten Netzeinheit 105 ermitteln. Zur Ermittlung des übertragenen Datenvolumens kann die Netzeinheit 105 jeweils die übertragenen Datenmengen für die von ihr versorgten Nutzer an die Steuereinrichtung 106 melden. Hierzu können beispielsweise entsprechende, die Datenmengen für die Nutzer angebenden Protokolle von der Netzeinheit 105 an die Steuereinrichtung 106 übermittelt werden.

Zur Überwachung von Nutzungsgrößen im Hinblick auf das Überschreiten eines zugehörigen Schwellenwerts können gleichfalls andere Netzeinheiten 105 als ein GGSN mit und den Netzeinheiten 105 zugehörigen Steuereinrichtungen 106 verwendet werden. Dabei brauchen die Steuereinrichtungen 106 nicht als separate Einrichtungen ausgeführt sein, sondern können auch in die Netzeinheiten 105 integriert werden. Darüber hinaus kann auch in anderen Funknetzen 101 als den zuvor konkret genannten eine Nutzerdatenbank 107 mit Nutzerdaten vorgesehen sein, auf welche Netzeinheiten 105 und/oder den Netzeinheiten 105 zugeordneten Steuereinrichtungen 106 zugreifen können.

Die von den Nutzern für den Zugriff auf den Datendienst verwendeten Endgeräte 104 umfassen eine Funkschnittstelle zur Verbindung mit den Zugangspunkten 103 des Funknetzes und beinhalten Softwareprogramme, die in den Endgeräten 104 ausgeführt werden und den von dem Funknetz 101 bereitgestellten Datendienst nutzen, um Daten über das Funknetz 101 zu beziehen oder zu versenden. Insbesondere können die Endgeräte 104 über einen Webbrowser verfügen, d.h. über eine Saftware für den Zugriff auf Webressourcen, insbesondere auf Webseiten. So kann insbesondere auf Webressourcen zugegriffen werden, die von Servern des Datennetzes 102 bereitgestellt werden. Zusätzlich oder alternativ kann ein Endgerät 104 ein oder mehrere Softwareprogramme für den Nachrichtenaustausch über den Datendienst enthalten, wie etwa Programme für E-Mail oder Instant Messaging, oder Programme die zur Bereitstellung weiterer Funktionalitäten auf Server des Datennetzes 102 oder des Funknetzes 101 zugreifen, beispielsweise um Daten abzurufen oder um Funktionen durchführen zu lassen, die in solche Server ausgelagert sind. Die Endgeräte 104 zur Ausführung der Softwareprogramme können beispielsweise mobile Endgeräte, wie etwa Mobiltelefone, Smartphones, PDAs, Notebookcomputer oder dergleichen sein, oder andere Geräte mit einer Schnittstelle bzw. Peripherieeinheiten für den Zugriff auf das Funknetz, wie etwa Personal Computer.

Der Zugriff auf den Datendienst des Funknetzes 101 ist beschränkt, d.h. für den Zugriff auf den Datendienst benötigt der Nutzer eine Berechtigung, die netzseitig beim Zugriff auf den Datendienst geprüft wird. Dies geschieht vorzugsweise aufgrund einer Anmeldung des Endgeräts 104 eines Nutzers an dem Funknetz 101 zur Nutzung des Datendienstes, bevor der Zugriff nach erfolgreicher Prüfung gestattet wird. Insbesondere kann die Prüfung, wie zuvor bereits beschrieben, beim Aufbau eines Routingkontextes für das Endgerät 104 vorgenommen werden. Zudem wird eine Vergebührung der Nutzung des Datendienstes vorgenommen, die nach Maßgabe eines Tarifs des Nutzers durchgeführt wird. Dabei erfolgt für so genannte Postpaid-Nutzer eine Abrechnung im Nachhinein jeweils nach Ablauf eines Abrechnungszeitraums, der beispielsweise einen Monat betragen kann, und für so genannte Prepaid-Nutzer ist die Abbuchung von einem im Voraus erworbenen Guthaben vorgesehen.

Für die Nutzung des Datendienstes können zeit- und/oder datenvolumenbasierte Gebühren vorgesehen sein. In einer Ausgestaltung kann eine Abrechnung nach einem über den Datendienst übertragenen Datenvolumen vorgenommen werden. Dabei kann es sich beispielsweise um das zu dem Endgerät 104 des Nutzers übertragene Downlinkdatenvolumen handeln oder um die Summe aus dem Downlinkdatenvolumen und dem von dem Endgerät 104 gesendeten Uplinkdatenvolumen. Zur Vergebührung kann dabei eine Gebühr pro Datenvolumeneinheit vorgesehen sein, die tarifspezifisch festgelegt sein kann. Gleichfalls kann eine Abrechnung nach der Nutzungsdauer des Datendienstes vorgesehen sein, wobei eine Gebühr pro Zeiteinheit vorgesehen sein kann, die ebenfalls tarifspezifisch festgelegt sein kann.

Wie eingangs bereits erwähnt, können Tarife darüber hinaus vorsehen, dass der Datendienst innerhalb des Abrechnungszeitraums für eine vorgegebene Dauer ("Inklusivzeit") und/oder zur Übertragung eines vorgegebenen maximalen Datenvolumens ("Inklusivvolumen") gegen eine Pauschalgebühr oder zu einer verringerten verbrauchsabhängigen Nutzungsgebühr genutzt werden kann, wobei das maximale Datenvolumen sich beispielsweise auf die an das Endgerät 101 übertragenen Downlinkdaten oder auf die Summe von Uplink- und Downlinkdaten beziehen kann. Bei Überschreiten der Dauer oder des maximalen Datenvolumens fallen bei pauschaler Berechnung der Inklusivzeit bzw. des Inklusivvolumens verbrauchsbasierte Gebühren an. Falls bereits eine verbrauchsbasierte Abrechnung der Inklusivzeit oder des Inklusivvolumens vorgesehen ist, kann sich die verbrauchsbasierte bei Überschreiten der Inklusivzeit oder des Inklusivvolumens erhöhen.

Alternativ oder zusätzlich kann vorgesehen sein, dass der Datendienstes nach dem Überschreiten der Inklusivzeit oder des Inklusivvolumens bis zur Beendigung des Abrechnungszeitraums mit Beschränkungen bereitgestellt wird. Beispielsweise kann eine Reduzierung der maximalen Datenrate oder eine in anderer Weise verringerte Dienstgüte vorgesehen sein.

Unterschiedliche Tarife können sich etwa in der enthaltenen Inklusivzeit und/oder im enthaltenen Inklusivvolumen unterscheiden. Dabei können sich Inklusivzeit und/odervolumen in einer bestimmten Abstufung mit steigender Tarifgebühr vergrößern. Ferner können sich verschiedene Tarife auch in der maximalen Datenrate oder anderen Dienstgüteparametern unterscheiden, wobei eine höhere Dienstgüte mit höheren Nutzungsgebühren verbunden ist. Insbesondere kann die Dienstgüte beispielsweise die Grund- oder Pauschalgebühr des Tarifs beeinflussen.

Die verschiedenen Tarife können derart abgestuft sein, dass jeweils ab einem bestimmten Umfang, in dem der Datendienst genutzt wird, der Wechsel in einen anderen Tarif zu geringeren Nutzungsgebühren führt. Beispielsweise kann ein Tarif mit einem größeren Inklusivvolumen oder einer größeren Inklusivzeit trotz höherer Pauschalgebühr günstiger sein, wenn der Nutzer ein bestimmtes Datenvolumen über den Datendienst überträgt, oder diesen über eine bestimmte Mindestdauer hinaus nutzt. Gleichfalls kann beispielsweise ein nutzungszeitbasierter Tarif mit höherer maximaler Datenrate trotz höherer Gebühr günstiger sein, wenn der Nutzer große Datenmengen über den Dienst überträgt, da durch eine erhöhte Datenübertragungsrate die Nutzungsdauer des Dienstes und damit die für die Nutzung anfallende zeitbasierte Gebühr verringert werden kann.

Einem oder mehreren Tarifen der zuvor genannten Art, die für die Nutzung des Funknetzes 101 angeboten werden, ist jeweils wenigstens ein Schwellenwert zugeordnet. Der Schwellenwert bezieht sich vorzugsweise auf die für den Tarif maßgebliche Nutzungsgröße, auf deren Grundlage die Abrechnung der Dienstnutzung vorgenommen wird. Je nach Tarif handelt es sich hierbei um die Nutzungsdauer, d.h. es wird ein Zeitschwellenwert vorgegeben, und/oder der Schwellenwert bezieht sich auf das übertragene Datenvolumen, d.h. es wird ein Volumenschwellenwert vorgegeben. Der Zeitschwellenwert entspricht einer vorgegebenen Nutzungsdauer nach einem vorgegebenen Bezugszeitpunkt und der Volumenschwellenwert kann insbesondere einem nach dem Bezugszeitpunkt angefallenen Downlinkdatenvolumen oder einer Summe des angefallenen Downlink- und Uplinkdatenvolumens entsprechen. Der Bezugszeitpunkt ist vorzugsweise der Beginn des jeweils aktuellen Abrechnungszeitraums eines Nutzers (bei Postpaid-Nutzern) oder der Zeitpunkt des Erwerbs bzw. der Freischaltung eines Guthabens (bei Prepaid-Nutzern) oder einem in anderer Weise festgelegten Zeitpunkt, beispielsweise der Monatsbeginn des jeweils aktuellen Monats.

Sofern ein Nutzer nicht dauerhaft zur Nutzung des Datendienstes in das Funknetz 101 eingebucht ist, können mehrere Sitzungen des Nutzers beendet worden sein, bis ein Schwellenwert ggf. überschritten wird. Gleichfalls kann ein Schwellenwert jedoch selbstverständlich auch innerhalb der ersten Sitzung nach dem Bezugszeitpunkt überschritten werden. Eine Sitzung bezeichnet dabei einen zusammenhängenden Zeitraum, in dem der Nutzer zur Nutzung des Datendienstes in das Funknetz 101 eingebucht ist.

Grundsätzlich können für die zur Nutzung des Datendienstes im Funknetz 101 vorgesehenen Tarife jeweils ein oder mehrere beliebige Schwellenwerte vorgegeben werden. In einer Ausgestaltung ist den Tarifen jeweils ein Schwellenwert zugeordnet, der nach Maßgabe des Datenvolumens bzw. der Nutzungsdauer bestimmt wird, bei dessen bzw. deren Überschreiten ein anderer als der aktuell gewählte Tarif für den Nutzer des Datendienstes günstiger wird. D.h., der Schwellenwert orientiert sich an derjenigen "Schwelle" des Nutzungsumfangs des Datendienstes, bei der sich der Wechsel zu einem anderen Tarif aufgrund geringerer Gebühren für den Nutzer lohnt. Diese "Schwelle" entspricht einem bestimmten Wert einer Nutzungsgröße. Maßgeblich ist dabei insbesondere die Nutzungsgröße, auf der die Abrechnung in dem betreffenden Tarif basiert. Die Schwelle kann jedoch auch ein Wert einer anderen Nutzungsgröße sein. Insbesondere ergibt sich die Schwelle aus dem Inklusivvolumen bzw. der Inklusivzeit des aktuellen und der übrigen Tarife und ggf. nach Maßgabe von anderen Parametern des aktuellen und der übrigen Tarife, wie beispielsweise der maximalen Datenübertragungsrate. Dabei kann sich etwa aufgrund unterschiedlicher maximaler Datenübertragungsraten in mehreren zeitbasierten Tarifen auch eine Schwelle für das übertragene Datenvolumen ergeben. Der für einen Tarif vorgegebene Schwellenwert kann der zuvor genannten Schwelle entsprechen oder einem bestimmten Bruchteil der Schwelle, beispielsweise einem Wert zwischen 80% und 100% der Schwelle der maßgeblichen Nutzungsgröße, insbesondere 90%. Wenn der Schwellenwert einem Bruchteil der Schwelle entspricht, kann der Nutzer bereits vor dem Erreichen der Schwelle über günstigere Tarife informiert werden.

Das Überschreiten der vorgegebenen Schwellenwerte der Nutzungsgröße für die Nutzer des Datendienstes wird innerhalb des Funknetzes 101 durch eine Überwachung Nutzungsgröße ermittelt. Die Überwachung wird vorzugsweise von einer Steuereinrichtung 106 einer der Netzeinheiten 105 durchgeführt, welche das Endgerät 104 des Nutzers versorgen, wobei die Erfassung der Nutzungsgröße in der Netzeinheit 105 oder in der Steuereinrichtung 106 erfolgen kann. Dabei kann vor allem das übertragene Datenvolumen in einer Netzeinheit 105, die für die Weiterleitung von Datenpaketen für den Nutzer zuständig ist, besonders einfach erfasst werden, da aufgrund der definierten Zuordnung der Netzeinheiten 105 zu den mit dem Funknetz 101 verbundenen Endgeräten 104 alle Daten jeweils über eine Netzeinheit 105 übertragen werden. Die Nutzungsdauer kann beispielsweise in der Steuereinrichtung 106 erfasst werden.

In einer Ausführungsform wird die Nutzungsgröße in dem für den Nutzer zuständigen als GGSN ausgeführten Netzeinheit 106 und der zugehörigen Steuereinrichtung 106 erfasst und überwacht. Vorteilhaft hat die Steuereinrichtung eines GGSN aufgrund ihrer Abrechnungsfunktion bereits standardmäßig Kenntnis über den Tarif des Nutzers, der zur Ermittlung des Schwellenwerts herangezogen wird. Zudem verfügen der GGSN und die zugehörige Steuereinrichtung 106 zur Ausführung ihrer Abrechnungsfunktion bereits über Funktionalitäten zur Erfassung der möglichen Nutzungsgrößen. Diese Funktionalitäten können auch für die Überwachung der Nutzungsgrößen im Hinblick auf das Überschreiten des Schwellenwerts verwendet werden, wenn die Überwachung in einem GGSN und der zugehörigen Steuereinheit 106 vorgenommen wird.

Der für einen bestimmten Nutzer jeweils maßgebliche Schwellenwert wird anhand des jeweiligen Tarifs des Nutzers bestimmt. Der Tarif ist in den Nutzerdaten angegeben, die in der Nutzerdatenbank 107 hinterlegt sind. Daher ermittelt die zur Überwachung der Nutzungsgröße vorgesehene Steuereinrichtung 106 zunächst den Tarif des Nutzers. Dabei wird eine von dem Endgerät 104 an das Funknetz 101 gesendete Nutzerkennung herangezogen, um die dem Nutzer in der Nutzerdatenbank 107 zugeordneten Nutzerdaten zu ermitteln und den Tarif aus den Nutzerdaten auszulesen. Die Nutzerkennung kann beispielsweise bei der Anmeldung für den Zugriff auf den Datendienst an das Funknetz 101 gesendet und dann der Netzeinheit 105 bzw. Steuereinrichtung 106 verfügbar gemacht werden. Bei der Nutzerkennung kann es sich in einem als Mobilfunknetz ausgestalteten Funknetz 101 beispielsweise um eine dem Nutzer zugeordneten MSISDN (Mobile Subscriber Integrated Services Digital Network Number) handeln. Unter Verwendung des Tarifs wird dann der maßgebliche Schwellenwert ermittelt. Hierzu kann beispielsweise eine in der Steuereinrichtung 106 gespeicherte Tabelle herangezogen werden, in der Zuordnungen zwischen Tarifen und Schwellenwerten gespeichert sind.

Zudem können an die Steuereinrichtung 106 ggf. Werte der überwachten Nutzungsgröße aus vorangegangenen Sitzungen, die nach dem Beginn des Bezugszeitpunkts stattgefunden haben, d.h., die Nutzungsdauer und/oder das angefallene Datenvolumen aus vorangegangenen Sitzungen des Nutzers, übermittelt werden. Diese Angaben sind in einer Ausführungsform innerhalb der Nutzerdaten in der Nutzerdatenbank 107 hinterlegt und können beispielsweise auch für die Ermittlung der Nutzungsdauer und/oder des angefallenen Datenvolumens in Bezug auf die Abrechnung herangezogen werden. Um die Angaben bezüglich der überwachten Nutzungsgrößen zu Beginn einer Sitzung aus der Nutzerdatenbank 107 auslesen zu können, werden sie bei Beendigung einer Sitzung in der Nutzerdatenbank 107 gespeichert. Hierzu werden vorzugsweise die nach dem Bezugszeitpunkt bis zur Beendigung der Sitzung erfasste Nutzungsdauer und/oder das entsprechende Datenvolumen in der Nutzerdatenbank 107 gespeichert. Wechselt die Zuständigkeit für das Endgerät 104 des Nutzers während einer laufenden Sitzung von der die Nutzungsgröße überwachenden Netzeinheit 104 zu einer anderen Netzeinheit 104 derselben Art, dann werden vorzugsweise ebenfalls die aktuellen Werte der überwachten Nutzungsgrößen an die neue Netzeinheit 104 übermittelt, so dass die zugehörige Steuereinheit 106 die Überwachung dann ausgehend von den übermittelten Werten fortführen kann.

Die Nutzungsgröße wird, wie bereits beschrieben, in der Netzeinheit 105 oder in der zugehörigen Steuereinrichtung erfasst 106 und in der Steuereinrichtung im Hinblick auf das Überschreiten des Schwellenwerts überwacht. Wenn die Steuereinrichtung 106 feststellt, dass die überwachte Nutzungsgröße den vorgegebenen Schwellenwert überschreitet, dann wird die Bereitstellung von Tarifinformationen für den Nutzer initiiert, sofern nicht für den Nutzer ein Sperrindikator gesetzt ist, der weiter unten noch erläutert wird. Die Tarifinformationen werden in einer Ausführungsform auf einer Webseite verfügbar gemacht, die von einer Bereitstellungseinheit 108 des Funknetzes 101 bereitgestellt wird und im Folgenden als Informationswebseite bezeichnet wird.

Um die Informationswebseite mit den Tarifinformationen an dem Endgerät 104 des Nutzers zur Anzeige zu bringen, wird eine Anforderung des Nutzers für den Zugriff auf eine Webressource in einer Ausgestaltung auf die Informationswebseite bzw. zu der Bereitstellungseinheit 108 umgeleitet. Die Anforderung bezieht sich auf eine Webressource, wie beispielsweise ein Webseite, auf die der Nutzer mittels seines Endgeräts 104 zugreifen möchte, und wird von dem Endgerät 104 des Nutzers an das Funknetz 101 gesendet, um über das Funknetz 101 zu dem Webserver weitergeleitet zu werden, der die betreffende Webressource bereitstellt. Zur Identifizierung der Webressource enthält die Anforderung deren Webadresse, insbesondere deren URL (Uniform Ressource Locator). Bei einer Umleitung der Anforderung wird diese jedoch innerhalb des Funknetznetzes 101 nicht an den Webserver weitergeleitet, sondern an die Bereitstellungseinheit 108, die aufgrund des Empfangs der umgeleiteten Anforderung die Tarifinformationen bereitstellt. Für den Zugriff auf Webressourcen über das Funknetz 101 kann das HTTP verwendet werden und bei der Anforderung kann es sich in diesem Fall um einen HTTP Request handeln.

Die Umleitung der Anforderung wird in einer Ausgestaltung von der Netzeinheit 105 vorgenommen, deren Steuereinrichtung 106 das Überschreiten des Schwellenwerts festgestellt hat. Nach der Feststellung, dass der Schwellenwert überschritten ist, aktiviert die Steuereinrichtung 106 zu diesem Zweck eine Umleitungsfunktion für den Nutzer in der Netzeinheit 105. Die Umleitungsfunktion bewirkt, dass Anforderungen des Nutzers für den Zugriff auf Webressourcen zu der Bereitstellungseinheit 108 umgeleitet werden. Dies geschieht, solange die Umleitungsfunktion aktiviert ist. Eine Deaktivierung der Umleitungsfunktion kann beispielsweise erfolgen, nachdem eine in der Netzeinheit 105 empfangene Anforderung umgeleitet worden ist. Eine wiederholte Umleitung von Anforderung an die Bereitstellungseinheit 108 kann auf diese Weise vermieden werden. Zusätzlich oder alternativ kann vorgesehen sein, dass die Umleitungsfunktion nach Ablauf einer vorgegebenen Zeitdauer deaktiviert wird. Hierdurch wird die Umleitungsfunktion insbesondere auch dann nach einer bestimmten Zeit deaktiviert, wenn keine Anforderung von dem Endgerät 104 des Nutzers empfangen worden ist. Nach Ablauf der Zeitdauer gesendete Anforderungen werden dann ohne Umleitung weitergeleitet.

Um nach dem Umleiten der Anforderung die Informationswebseite mit den Tarifinformationen an das Endgerät 104 zu übermitteln, kann vorgesehen sein, dass die Anforderung in der Netzeinheit 105 modifiziert bzw. durch eine modifizierte Anforderung ersetzt wird. Die modifizierte Anforderung enthält als Zieladresse nicht die Webadresse der ursprünglich von dem Nutzer angeforderten Webressource sondern eine Webadresse, die auf die Bereitstellungseinheit 108 verweist und der die Tarifinformationen enthaltende Webseite zugordnet ist. Alternativ kann vorgesehen sein, dass die Anforderung unverändert zu der Bereitstellungseinheit 108 weitergeleitet wird. Um in diesem Fall die Tarifinformationen bereitzustellen, kann die Bereitstellungseinheit 108 beispielsweise dazu programmiert sein, die Tarifinformationen unabhängig von den enthaltenen Webadressen aufgrund von Anforderungen, die von der Netzeinheit 105 erhalten werden, verfügbar zu machen.

Unabhängig davon, ob die Anforderung modifiziert wird oder nicht, wird von der Netzeinheit 105 vorzugsweise eine Kennung des Nutzers bzw. seines Endgeräts 104 an die Bereitstellungseinheit 108 übergeben. Ferner wird die Webadresse der von dem Nutzer angeforderten Webressource übermittelt. Die Kennung und die Webadresse können in der weitergeleiteten Anforderung enthalten sein oder separat von der Netzeinheit 105 an die Bereitstellungseinheit 108 übergeben werden.

Wenn die umgeleitete Anforderung in der Bereitstellungseinheit 108 empfangen wird, dann erzeugt die Bereitstellungseinheit 108 eine Webseite mit personalisierten Tarifinformationen, die an das Endgerät 104 übertragen und dort zur Anzeige gebracht wird. Dies geschieht so, als ob der Nutzer die Webseite mit den Tarifinformationen direkt angefordert hätte. Um die personalisierten Tarifinformationen bereitstellen zu können, wir die Informationswebseite für jeden Nutzer bzw. bei jedem Aufruf individuell erzeugt. Die Tarifinformationen spezifizieren in einer Ausgestaltung den alternativen Tarif oder die mehreren alternativen Tarife für die Nutzung des Datendienstes, die für den Nutzer aufgrund seines Nutzungsverhaltens günstiger als sein aktueller Tarif sind. Sofern sich der Schwellenwert, dessen Überschreiten der Umleitung der Anforderung zu der Bereitstellungseinheit 108 zugrunde liegt, wie zuvor beschrieben auf eine Schwelle des Umfangs der Nutzung des Datendienstes bezieht, bei deren Überschreiten an anderer als der aktuelle Tarif günstiger für den Nutzer ist, können die Tarifinformationen insbesondere diesen günstigeren Tarif spezifizieren.

Zur Erzeugung der Informationswebseite greift die Bereitstellungseinheit 108 vorzugsweise auf eine Sammlung von Informationen zu allen möglichen alternativen Tarifen für die Nutzer des Datendienstes zu, die in der Bereitstellungseinheit 108 gespeichert ist. Aus den hinterlegten Informationen werden bei einem Aufruf der Informationswebseite die Informationen zu den alternativen Tarifen für den betreffenden Nutzer ausgewählt und die Webseite eingebracht. Dabei kann vorgesehen sein, dass die personalisierten Informationen in einen vorgegebenen Rahmen eingefügt werden. Hierdurch kann eine Webseite erzeugt werden, die einen standardisierten Aufbau hat, der für alle Nutzer gleich ist, in den jedoch individuell, d.h. bei jedem Aufruf der Informationswebseite, angepasste Tarifinformationen eingefügt werden.

Zur Auswahl der Tarifinformationen für die zu erzeugende Informationswebseite bestimmt die Bereitstellungseinheit 108 in einer Ausgestaltung zunächst den aktuellen Tarif des Nutzers. Hierzu wird die Kennung des Nutzers herangezogen, die zusammen mit der umgeleiteten Anforderung der Webressource von der Netzeinheit 105 an die Bereitstellungseinheit 108 übermittelt worden ist. Unter Verwendung der Kennung kann der Tarif des Nutzers insbesondere aus der Nutzerdatenbank 107 ausgelesen werden. Für den ermittelten Tarif des Nutzers bestimmt die Bereitstellungseinheit 108 dann die alternativen Tarife, die auf der Informationswebseite angegeben werden. Dabei können in der Bereitstellungseinheit 108 Zuordnungen zwischen den zur Nutzung des Datendienstes verfügbaren Tarifen und alternativen Tarifen gespeichert sein, auf welche die Bereitstellungseinheit 108 zur Ermittlung der Tarife zugreift, die auf der zu erzeugenden Informationswebseite angegeben werden sollen.

In der zuvor beschriebenen Ausgestaltung ermittelt die Bereitstellungseinheit 108 den Tarif des Nutzers, obwohl die Tarifermittlung zuvor bereits in der Steuereinrichtung 106 durchgeführt worden ist. Hierdurch wird der erforderliche Informationsaustausch zwischen der Steuereinrichtung 106 bzw. der Netzeinheit 105 und der Bereitstellungseinheit 108 reduziert. Insbesondere braucht kein zusätzlicher Mechanismus vorgesehen zu werden, um Informationen über den Tarif des Nutzers zusammen mit der Anforderung an die Bereitstellungseinheit 108 zu übermitteln. Gleichwohl kann ein solcher Mechanismus vorgesehen werden. In diesem Fall kann die Bereitstellungseinheit 108 den Tarif des Nutzers direkt anhand der erhaltenen Informationen bestimmen und braucht ihn nicht unter Verwendung der Kennung abzufragen.

Neben Informationen zu alternativen Tarifen bietet die Webseite vorzugsweise eine Möglichkeit zur Interaktion mit dem Benutzer, d.h. sie bietet dem Nutzer die Möglichkeit, mittels seines Endgeräts 104 Bedienaktionen auf der Webseite vorzunehmen. Anhand derartiger Bedienaktionen kann der Nutzer in einer Ausführungsform einen der alternativen Tarife über die Webseite auswählen und buchen. Der Buchungsvorgang kann einen Bezahlvorgang beinhalten, der in einer Ausgestaltung ebenfalls in einer dem Fachmann grundsätzlich bekannten Weise über die Webseite durchgeführt werden kann. Gleichfalls kann der Nutzer durch eine entsprechende Bedienaktion die Webseite verlassen, ohne einen alternativen Tarif zu buchen.

Nachdem der Nutzer einen alternativen Tarif gebucht hat oder wenn er die Informationswebseite ohne Auswahl eines neuen Tarif durch eine entsprechende Interaktion verlässt, wird er von der Bereitstellungseinheit 108 zu der Webadresse weitergeleitet, die in der ursprünglichen, zu der Bereitstellungseinheit 108 umgeleiteten Anforderung angegeben war und von der Netzeinheit 105 an die Bereitstellungseinheit 108 übermittelt worden ist. Zur Weiterleitung des Nutzers erzeugt die Bereitstellungseinheit 108 in einer Ausgestaltung eine Anforderung für den Zugriff auf die durch die Webadresse spezifizierte Webressource mit den Absenderangaben des Endgeräts 104 des Nutzers. Diese Absenderangaben können beispielsweise aus der in der Bereitstellungseinheit 108 empfangenen umgeleiteten Anforderung entnommen werden. Die Anforderung für den Zugriff auf die Webressource wird dann von der Bereitstellungseinheit 108 an den die Webseite bereitstellenden Webserver weitergeleitet. Dies kann über die Netzeinheit 105 oder über eine andere Route geschehen. Aufgrund der Weiterleitung des Nutzers wird nach dem Verlassen der Informationswebseite ohne eine weitere Nutzeraktion die ursprünglich gewünschte Webressource an dem Endgerät 104 des Nutzers verfügbar gemacht.

In einer Ausgestaltung erlaubt die Informationswebseite dem Nutzer auch, durch eine Bedienaktion, beispielsweise durch Auswahl eines entsprechenden Feldes, anzugeben, dass er auch in Zukunft keine Informationen über alternative Tarife wünscht. Nach einer solchen Angabe des Nutzers wird dieser von der Bereitstellungseinheit 108 in der zuvor beschriebenen Weise zu der ursprünglichen gewünschten Webadresse weitergeleitet, wie es beispielsweise bei einem (einfachen) Verlassen der Informationswebseite auch vorgenommen wird. Darüber hinaus wird in dem Funknetz 101 ein Sperrindikator hinterlegt, der die Anzeige der Informationswebseite zukünftig bzw. für eine vorgegebene Zeitdauer verhindert.

Hierzu sendet die Bereitstellungseinheit 108 in einer Ausführungsform eine Benachrichtigung an die Steuereinrichtung 106, mit der die Steuereinrichtung 106 darüber informiert wird, dass der Nutzer zukünftig keine Tarifinformationen angezeigt bekommen möchte. Aufgrund des Erhalts der Benachrichtigung setzt die Steuereinrichtung 106 den Sperrindikator für den Nutzer. Der Sperrindikator kann in der Steuereinrichtung 106 beispielsweise unter Zuordnung zu einer Kennung des Nutzers hinterlegt werden.

Alternativ kann der Sperrindikator auch in der Nutzerdatenbank 107 gespeichert werden. Wenn für einen Nutzer ein solcher Sperrindikator vorhanden ist, dann wird der Sperrindikator in diesem Fall von der Steuereinrichtung 106 beispielsweise zusammen mit den Tarifinformationen für den Nutzer aus der Nutzerdatenbank 107 ausgelesen, um die Überwachung der Nutzungsgröße vorzunehmen.

Die Steuereinrichtung 106 veranlasst bei gesetztem Sperrindikator keine Umleitung des Nutzers zu der Informationswebseite. Darüber hinaus kann die Steuereinrichtung 106 bei einem gesetzten Sperrindikator auf die Überwachung der Nutzungsgröße im Hinblick auf ein Überschreiten des Schwellenwerts verzichten, da eine solche Überwachung nicht erforderlich ist, wenn keine Tarifinformationen angezeigt werden sollen.

Der Sperrindikator kann, nachdem er gesetzt worden ist, dauerhaft für den Nutzer in der Steuereinheit 106 gespeichert bleiben. Gleichfalls kann vorgesehen sein, dass der Sperrindikator nach einer vorgegebenen Zeitspanne, die beispielsweise einige Monate betragen kann, wieder gelöscht wird. Ein entsprechender Mechanismus zum Löschen des Sperrindikators kann beispielsweise in der Steuereinrichtung 106 implementiert sein. Sofern die Hinterlegung des Sperrindikators in der Nutzerdatenbank 107 vorgesehen ist, kann ebenfalls eine dauerhafte Speicherung oder ein Löschen nach einer vorgegebenen Zeitspanne vorgesehen sein. Hierzu kann ein entsprechender, in der Nutzerdatenbank 107 implementierter Mechanismus vorgesehen werden.

Aufgrund der vorgesehenen Umleitung einer Anforderung des Nutzers zu der Informationswebseite in den zuvor beschriebenen Ausführungsformen, wird die Informationswebseite nur dann bereitgestellt, wenn eine solche Anforderung von dem Nutzer gesendet und in der Netzeinheit 105 empfangen wird. Eine Umleitung zu der Informationswebseite erfolgt nicht, wenn der Nutzer keine solche Anforderung sendet. Dies kann beispielsweise der Fall sein, wenn der Nutzer nicht mittels eines Webbrowsers zur Anzeige von Webseiten auf den Datendienst zugreift, sondern mittels eines anderen Programms des Endgeräts 104, welches keine Anforderung zur Darstellung von Webseiten sendet.

Um dem Nutzer auch in diesem Fall die Tarifinformationen mit den alternativen Tarifen zur Verfügung stellen zu können, ist vorgesehen, dass eine Nachricht an das Endgerät 104 des Nutzers gesendet wird, wenn kein Zugriff auf die Informationswebseite erfolgt. Hierzu sendet die Steuereinrichtung 106 eine Meldung an die Bereitstellungseinheit 108, wenn die Umleitung auf die Informationswebseite initiiert wird. Die Meldung enthält vorzugsweise die Kennung des Nutzers, um diesen beim Zugriff auf die Informationswebseite mit der Meldung in Verbindung bringen zu können. Aufgrund des Erhalts der Information startet die Bereitstellungseinheit 108 einen Timer mit einer vorgegebenen Zeitdauer, die beispielsweise eine Länge zwischen einigen Minuten und einer Stunde haben kann. Erfolgt innerhalb der Zeitdauer, d.h. vor Ablauf des Timers, kein Zugriff auf die Informationswebseite unter der in der Meldung enthaltenen Nutzerkennung, dann sendet die Bereitstellungseinheit 108 die Nachricht an das Endgerät 104 des Nutzers.

Die Nachricht kann grundsätzlich über einen beliebigen in dem Funknetz 101 bereitgestellten Nachrichtendienst gesendet werden. Falls es sich bei dem Funknetz 101 um ein Mobilfunknetz handelt, kann beispielsweise der SMS (Short Message Service) verwendet werden, um die Nachricht zu senden. Die Nachricht enthält eine Webadresse die Informationswebseite zugeordnet ist. Diese kann von einem Webbrowser des Endgeräts 104 dazu verwendet werden, die Informationswebseite über den Datendienst des Funknetzes 101 aufzurufen. Geschieht dies, wird der Nutzer in der Bereitstellungseinheit 108 identifiziert, und es wird in der zuvor beschriebenen Weise eine Informationswebseite für den Nutzer erzeugt. Die Identifizierung des Nutzers kann anhand einer Nutzerkennung vorgenommen werden, die in einer vom dem Endgerät 104 gesendeten und in der Bereitstellungseinheit 108 empfangenen Anforderung für den Zugriff auf die Informationswebseite enthalten ist. Hierbei kann es sich um eine Kennung handeln, welche auch innerhalb der Nutzerdaten in der Nutzerdatenbank 107 gespeichert ist und somit direkt zur Identifizierung des Nutzers verwendet werden kann, wie beispielsweise die dem Nutzer zugeordnete MSISDN, oder es kann sich beispielsweise um eine Kennung, wie etwa die dem Endgerät 104 des Nutzers zugeordnete IP-Adresse, handeln, die dem Nutzer bzw. seinem Endgerät 104 innerhalb des Funknetzes 101 temporär zugeordnet ist, wobei die Bereitstellungseinheit 107 in diesem Fall zur Identifizierung Nutzer auf die im Funknetz 101 hinterlegte Zuordnung zugreifen kann.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen.

In den Patentansprüchen angegebene Bezugszeichen sind nicht als Beschränkungen der eingesetzten Mittel und Schritte anzusehen.

### Bezugszeichen

- 101: Funknetz
- 102: Datennetz
- 103: Zugangspunkt
- 104: Endgerät
- 105: Netzeinheit
- 106: Steuereinrichtung
- 107: Nutzerdatenbank
- 108: Bereitstellungseinheit

## Patentansprüche

1. Verfahren zum personalisierten Bereitstellen von Informationen für einen Nutzer in einem Datentransportnetz, bei dem
bei einer bestehenden Datenverbindung zwischen einem Endgerät (104) des Nutzers und dem Datentransportnetz wenigstens eine mit der Datenverbindung in Verbindung stehende Nutzungsgröße in einer Netzeinrichtung des Datentransportnetzes mit einem Schwellenwert verglichen wird, wobei der Schwellenwert in Abhängigkeit von in dem Datentransportnetz hinterlegten Nutzerdaten des Nutzers bestimmt wird, und
von einer Bereitstellungseinheit (108) des Datentransportnetzes die Informationen zur Anzeige an dem Endgerät (104) des Nutzers aufgrund einer Feststellung eines Überschreitens des Schwellenwerts durch die Nutzungsgröße bereitgestellt werden, wobei die Nutzerdaten Angaben über einen aktuellen Tarif des Nutzers zur Nutzung des Datentransportnetzes umfassen und wobei die bereitgestellten Informationen Angaben über alternative Tarife enthalten, die besser als der aktuelle Tarif an ein basierend auf der Nutzungsgröße bestimmtes Nutzungsverhalten des Nutzers angepasst sind, wobei die Informationen in einer Webseite enthalten sind, die von der Bereitstellungseinheit (108) bereitgestellt wird, und der Nutzer einen der alternativen Tarife durch eine Bedienaktion auf der bereitgestellten Webseite buchen kann.

2. Verfahren nach Anspruch 1, wobei die Informationen in Abhängigkeit von den Nutzerdaten und/oder dem überschrittenen Schwellenwert bestimmt werden.

3. Verfahren nach Anspruch 1, wobei eine von dem Endgerät (104) gesendete Anforderung einer Webressource in dem Datentransportnetz oder einem damit verbundenen Netz innerhalb des Datentransportnetzes zu der Bereitstellungseinheit (108) umgeleitet wird.

4. Verfahren nach Anspruch 3, wobei zusammen mit der umgeleiteten Anforderung eine Nutzerkennung des Nutzers an die Bereitstellungseinheit (108) gesendet wird, und wobei die Bereitstellungseinheit (108) die Nutzerdaten unter Verwendung der Nutzerkennung bestimmt.

5. Verfahren nach Anspruch 1 oder 2, wobei von dem Netz eine Nachricht mit einer Webadresse an das Endgerät (104) gesendet wird, wobei anhand der Webadresse ein Aufruf der Webseite mittels des Endgeräts (104) vorgenommen werden kann.

6. Verfahren nach Anspruch 5, wobei die Nachricht an das Endgerät (104) gesendet wird, wenn innerhalb eines aufgrund des Überschreitens des Schwellenwerts gestarteten Zeitintervalls kein Zugriff auf die Webseite von der Bereitstellungseinheit (108) festgestellt wird.

7. Verfahren nach einem der vorangegangenen Ansprüche, wobei die Nutzungsgröße ein Datenvolumen ist, das in einem vorgegebenen Zeitraum zu dem Endgerät (104) übertragen und/oder von Endgerät (104) gesendet worden ist.

8. Verfahren nach einem der vorangegangenen Ansprüche, wobei die Nutzungsgröße eine Dauer von Verbindungen des Nutzers ist.

9. Verfahren nach einem der vorangegangen Ansprüche, wobei eine Netzeinheit (105) dafür vorgesehen ist, an das Endgerät (104) adressierte und/oder von dem Endgerät (104) gesendete Datenpakete weiterzuleiten.

10. Verfahren nach einem der vorangegangenen Ansprüche, wobei das Datentransportnetz ein Mobilfunknetz ist.

11. Verfahren nach einem der vorangegangenen Ansprüche, wobei die Netzeinrichtung (105) einen GGSN umfasst.

12. System zum personalisierten Bereitstellen von Informationen für einen Nutzer eines Datentransportnetzes, umfassend
eine Netzeinrichtung des Datentransportnetzes, die dazu ausgestaltet ist, bei einer bestehenden Datenverbindung zwischen einem Endgerät (104) des Nutzers und dem Datentransportnetz wenigstens eine mit der Datenverbindung in Verbindung stehende Nutzungsgröße in einer Netzeinrichtung des Datentransportnetzes mit einem Schwellenwert zu vergleichen und den Schwellenwert in Abhängigkeit von in dem Datentransportnetz hinterlegten Nutzerdaten des Nutzers zu bestimmen, wobei die Nutzerdaten Angaben über einen aktuellen Tarif des Nutzers zur Nutzung des Datentransportnetzes umfassen, und
eine mit der Netzeinrichtung zusammenwirkende Bereitstellungseinheit (108) des Datentransportnetzes, wobei Informationen zur Anzeige an dem Endgerät (104) des Nutzers aufgrund einer Feststellung eines Überschreitens des Schwellenwerts durch die Nutzungsgröße von der Bereitstellungseinheit (108) bereitstellbar sind, und wobei die Informationen Angaben über alternative Tarife enthalten, die besser als der aktuelle Tarif an ein basierend auf der Nutzungsgröße bestimmtes Nutzungsverhalten des Nutzers angepasst sind, wobei die Bereitstellungseinheit (108) eingerichtet ist die Informationen mittels einer Webseite bereitzustellen, so dass der Nutzer einen der alternativen Tarife durch eine Bedienaktion auf der bereitgestellten Webseite buchen kann.

13. System nach Anspruch 12, wobei die Bereitstellungseinheit (108) dazu ausgestaltet ist, die Informationen in Abhängigkeit von den Nutzerdaten und/oder dem überschrittenen Schwellenwert zu bestimmen.

## Claims

1. Method for the personalized provision of information for a user in a data transport network, in which
in an existing data connection between a terminal (104) of the user and the data transport network, at least one usage amount in connection with the data connection in a network device of the data transport network is compared with a threshold value, wherein the threshold value is determined depending on user data of the user stored in the data transport network, and
the information for display on the terminal (104) of the user is provided by a provisioning unit (108) of the data transport network due to a determination that the usage amount exceeds the threshold value, wherein the user data contains details about a current rate of the user for use of the data transport network and wherein the provided information includes details about alternative rates, which are better suited than the current rate to a certain usage behavior of the user based on the usage amount, wherein the information is contained in a website, which is provided by the provisioning unit (108), and the user can book one of the alternative rates through an operating action on the provided website.

2. Method according to claim 1, wherein the information is determined depending on the user data and/or the exceeded threshold value.

3. Method according to claim 1, wherein a request for a web resource sent by the terminal (104) in the data transport network or a network within the data transport network connected thereto, is redirected to the provisioning unit (108).

4. Method according to claim 3, wherein, together with the redirected request, a user ID of the user is sent to the provisioning unit (108), and wherein the provisioning unit (108) determines the user data using the user ID.

5. Method according to claim 1 or 2, wherein a message with a web address is sent from the network to the terminal (104), wherein, using the web address, a calling-up of the website can be carried out by means of the terminal (104).

6. Method according to claim 5, wherein the message is sent to the terminal (104) when no access to the website is determined by the provisioning unit (108) within a time interval started due to the exceeding of the threshold value.

7. Method according to one of the preceding claims, wherein the usage amount is a volume of data that, in a predetermined time period, has been transmitted to the terminal (104) and/or has been sent from terminal (104).

8. Method according to one of the preceding claims, wherein the usage amount is a duration of connections of the user.

9. Method according to one of the preceding claims, wherein a network unit (105) is provided for the purpose of forwarding data packets addressed to the terminal (104) and/or sent by the terminal (104).

10. Method according to one of the preceding claims, wherein the data transport network is a mobile telephone network.

11. Method according to one of the preceding claims, wherein the network unit (105) includes a GGSN.

12. System for the personalized provision of information for a user of a data transport network, including
a network device of the data transport network which is configured, during an existing data connection between a terminal (104) of the user and the data transport network, to compare at least one usage amount in connection with the data connection in a network device of the data transport network with a threshold value, and to determine the threshold value depending on user data of the user stored in the data transport network, wherein the user data includes details about an actual rate of the user for use of the data transport network, and
a provisioning unit (108) of the data transport network cooperating with the network device, wherein information for display on the terminal (104) of the user is providable by the provisioning unit (108) due to a determination that the usage amount exceeds the threshold value, and wherein the information contains details about alternative rates, which are better suited than the current rate to a certain usage behavior of the user based on the usage amount, wherein the provisioning unit (108) is configured to provide the information by means of a website so that the user can book one of the alternative rates through an operating action on the provided website.

13. System according to claim 12, wherein the provisioning unit (108) is configured for the purpose of determining the information depending on the user data and/or the exceeded threshold value.

## Revendications

1. Procédé destiné à la fourniture personnalisée d'informations pour un utilisateur dans un réseau de transport de données, dans lequel,
lors d'une liaison de données existant entre un terminal (104) de l'utilisateur et le réseau de transport de données, au moins une grandeur d'exploitation communiquant avec la liaison de données dans un dispositif de réseau du réseau de transport de données est comparée avec une valeur seuil, la valeur seuil étant déterminée en fonction de données d'utilisateur de l'utilisateur mémorisées dans le réseau de transport de données, et
dans lequel, les informations, dans le but de les afficher sur le terminal (104) de l'utilisateur, sont fournies par une unité de fourniture (108) du réseau de transport de données en raison d'une constatation, par la grandeur d'exploitation, d'un dépassement de la valeur seuil, les données d'utilisateur contenant des indications sur un tarif actuel de l'utilisateur pour l'utilisation du réseau de transport de données, et les informations fournies contenant des indications sur des tarifs alternatifs, lesquels sont mieux adaptés à un comportement d'utilisation déterminé de l'utilisateur, basé sur la grandeur d'exploitation, que le tarif actuel, les informations étant contenues sur un site web qui est mis à disposition par l'unité de fourniture (108), et l'utilisateur pouvant, par une manipulation, réserver sur le site web mis à disposition un des tarifs alternatifs.

2. Procédé selon la revendication 1, les informations étant déterminées en fonction des données d'utilisateur et/ou de la valeur seuil dépassée.

3. Procédé selon la revendication 1,
une demande, émise par le terminal (104), d'une ressource web dans le réseau de transport de données ou dans un réseau qui y est relié étant réacheminée vers l'unité de fourniture (108) à l'intérieur du réseau de transport de données.

4. Procédé selon la revendication 3,
un identifiant de l'utilisateur, conjointement avec la demande réacheminée, étant émis à l'unité de fourniture (108), et l'unité de fourniture (108) déterminant les données d'utilisateur en utilisant l'identifiant.

5. Procédé selon la revendication 1 ou 2,
un message comprenant une adresse web étant émis au terminal (104) par le réseau, un appel du site web pouvant être réalisé au moyen du terminal (104) à l'aide de l'adresse web.

6. Procédé selon la revendication 5,
le message étant émis au terminal (104) si, pendant un intervalle de temps démarré en raison du dépassement de la valeur seuil, aucun accès au site web n'est constaté par l'unité de fourniture (108).

7. Procédé selon l'une quelconque des revendications précédentes,
la grandeur d'exploitation étant un volume de données qui a été transmis vers le terminal (104) et/ou émis par le terminal (104) pendant une période prédéfinie.

8. Procédé selon l'une quelconque des revendications précédentes,
la grandeur d'exploitation étant une durée de connexions de l'utilisateur.

9. Procédé selon l'une quelconque des revendications précédentes, une unité de réseau (105) étant ménagée pour transmettre des paquets de données adressés au terminal (104) et/ou émis par le terminal (104).

10. Procédé selon l'une quelconque des revendications précédentes, le réseau de transport de données étant un réseau radio mobile.

11. Procédé selon l'une quelconque des revendications précédentes, le dispositif de réseau (105) comprenant un GGSN.

12. Système destiné à la fourniture personnalisée d'informations pour un utilisateur d'un réseau de transport de données, comprenant un dispositif de réseau du réseau de transport de données, lequel est conçu, lors d'une liaison de données existant entre un terminal (104) de l'utilisateur et le réseau de transport de données, pour comparer au moins une grandeur d'exploitation communiquant avec la liaison de données dans un dispositif de réseau du réseau de transport de données avec une valeur seuil et pour déterminer la valeur seuil en fonction de données d'utilisateur de l'utilisateur mémorisées dans le réseau de transport de données, les données d'utilisateur comprenant des indications sur un tarif actuel de l'utilisateur pour l'utilisation du réseau de transport de données, et comprenant
une unité de fourniture (108) du réseau de transport de données, coopérant avec le dispositif de réseau, des informations destinées à être affichées sur le terminal (104) de l'utilisateur en raison d'une constatation, par la grandeur d'exploitation, d'un dépassement de la valeur seuil pouvant être fournies par l'unité de fourniture (108),
et les informations fournies contenant des indications sur des tarifs alternatifs, lesquels sont mieux adaptés à un comportement d'utilisation déterminé de l'utilisateur, basé sur la grandeur d'exploitation, que le tarif actuel, et l'unité de fourniture (108) étant configurée pour fournir les informations au moyen d'un site web de sorte que l'utilisateur puisse, par une manipulation, réserver sur le site web mis à disposition un des tarifs alternatifs.

13. Système selon la revendication 12,
l'unité de fourniture (108) étant conçue pour déterminer les informations en fonction des données d'utilisateur et/ou de la valeur seuil dépassée.
